# EUROPEAN PATENT SPECIFICATION

(11) **EP 1 049 387 B1**
(45) Date of publication and mention of the grant of the patent: **07.05.2008**
(21) Application number: 99906178.1
(22) Date of filing: 22.01.1999
(51) Int. Cl.: A23L 1/06, A23L 1/064, A23L 1/068, A23L 1/212

(54) **ADDITIVE PRE-MIX FOR FOOD PRODUCTS**
ZUSATZSTOFFVORMISCHUNG FÜR NAHRUNGSMITTEL
PREMELANGE ADDITIF POUR PRODUITS ALIMENTAIRES

(30) Priority: 23.01.1998 IT MO980014; 27.05.1998 IT MO980117; 25.11.1998 IT MO980239
(43) Date of publication of application: 08.11.2000
(73) Proprietor: Pre Gel S.P.A., 42029 Villa Gavasseto (RE) (IT)
(72) Inventor: RABBONI, Luciano, I-42019 Scandiano (IT)
(74) Representative: Crugnola, Pietro
(86) International application number: PCT/EP1999/000370
(87) International publication number: WO 1999/037168

(56) References cited:
- WO-A-96/39877
- FR-A- 1 585 399
- US-A- 4 232 053
- US-A- 4 350 711
- US-A- 4 387 109
- US-A- 4 430 352
- US-A- 5 385 747
- US-A- 5 688 548
- J.L. MULTON: "Additifs et Auxiliaires de Fabrication dans les Industries Agro-Alimentaires" 1992 , LAVOISIER , PARIS XP002102803 Chap.32 see tables 2-4,6,7,9
- D.K.TRESSLER, J.G.WOODROOF: "Food Products Formulary - Volume 3" 1976 , AVI , USA XP002078535 Pages 9, 13, 14, 16, 20, 27, 29, 30, 47, 65, 83, 88-91, 96-98, 100, 102, 107, 108, 117, 121 see the whole document

## Description

The invention concerns preparing flowable or semifluid food products, in particular fruit sauces, or creams to be used as decorations, or stuffings, for ice-creams, confectionery and catering.

The prior art comprises preparing fruit sauces in industrial premises and the subsequent packaging for the delivery of the product to a professional user, as a confectioner or an ice-cream manufacturer, a cook or a pizza-maker, who introduces it into a complete food product for eating.

Therefore, the professional user is, at present, obliged to supply himself with a considerable range of sauces having different tastes, if he wishes to supply his customers with an acceptable range of products, for example ice creams, or cakes, incorporating said sauces. This involves a considerable increase in costs and, moreover, makes it difficult to preserve the various types of sauces, once the respective package has been opened.

Alternatively, the professional user himself may, if necessary, prepare, in an extemporaneous manner, the sauces he needs, which involves a considerable waste of time.

Furthermore it is difficult to obtain a creamy and compacted structure of the sauce and to preserve it after immediate use. In addition when fruit-salads are to be prepared, a drawback occurs consisting of a quick browning caused by perishability of the fruit, said browning causing, in addition, an alteration of the preparation taste.

An aim of the invention is to supply an user, in particular a professional user, with a compound which considerably facilitates the preparation of flowable or semifluid food products.

According to the invention, there is provided a ready-to-use pre-mix package, according to claim 1, containing a compound comprising
- an antioxidant agent;
- a preservative agent;
- an acidifying agent;
- a stabilising and thickening agent.
and a method of preparing a fruit salad according to claim 8.

The antioxidant agent is used because the antioxidant agent inhibits the natural browning of the fruit. The antioxidant agent preferably comprises ascorbic acid, salts and derivatives thereof, gallates, butylated hydroxyanisole, butilated hydroxytoluene, tocopherols.

The preservative agent has an antimicrobial effect because it protects the sauce from microbial attacks.

The preservative agent preferably comprises sorbic acid and its salts, propionic acid and its salts, benzoic acid and its salts, hydroxybenzoates.

The acidifying agent is used to reduce the pH of the sauce resulting from the use of the compound, so as to facilitate the action of the preserving agent. Moreover the acidifying agent is used to freshen up the colours of the fruit and the flavour thereof because it restores the natural acidity of the fruit which has been altered by addition of sugar.

The acidifying agent preferably comprises citric acid, tartaric acid, metatartaric acid, malic acid.

The stabilising and thickening agent gives the compound a certain viscosity, inhibiting its surface flowing in such a way that the sauce which incorporates the compound exhibits a good adherence to a solid support, like the pastry of a cake, or an ice cream.

The stabilising and thickening agent may comprise modified or natural starch, precooked, or non-precooked, gelatines, alginic acid and its salts, guar gum and other gums, agar-agar, carrageenin, meal of carob seeds, pectins, cellulose and its derivatives, xanthan gum.

The stabilising and thickening agent may be activated at room temperature, or at warm conditions (about 75°C).

The compound resulting from using a thickening agent which may be activated at room temperature is preferably suitable for preparing sauces which have to be used at positive centigrade temperatures.

The compound resulting from using a thickening agent may be activated at warm condition is particularly suitable for preparing sauces which have to be used at negative centigrade temperatures, i.e. in particular to garnish ice cream, deep-frozen cakes, ice-cream cakes and confectionery products in general, both inside and in surface.

The compound is in the form of a creamy paste containing suitable proportions of various agents.

Examples of compounds according to the invention are illustrated here below. The composition of the compound, in each example, is detailed by means of the weight percentage of each ingredient per weight unit of the compound for food products (column A), or by means of the percentage of each component per weight unit of the product obtained using the compound (column B).

### Example 1

Compound in powdery form suitable for being used at room temperature.

| | | A | B |
|---|---|---|---|
| - | L-ascorbic acid | | |
| | (antioxidant agent) | 0 - 5 | 0 - 2 |
| - | sorbic acid or its salts | | |
| | (preservative agent) | 0 - 3 | 0 - 1,2 |
| - | citric acid | | |
| | (acidifying agent) | 0 - 10 | 0 - 4 |
| - | modified, or natural, precooked | | |
| | or non-precooked, starch which | | |
| | may be activated at room | | |
| | temperature (stabilising and | | |
| | thickening agent) | 0 -80 | 0 - 32 |
| - | sugar | qs | |

### Example 2

Compound in powdery form suitable for being used at negative centigrade temperatures.

| | | A | B |
|---|---|---|---|
| - | L-ascorbic acid | | |
| | (antioxidant agent) | 0 - 5 | 0 - 2 |
| - | sorbic acid or its salts | | |
| | (preservative agent) | 0 - 3 | 0 - 1,2 |
| - | citric acid | | |
| | (acidifying agent) | 0 - 10 | 0 - 4 |
| - | modified, or natural, precooked | | |
| | or non-precooked, starch which | | |
| | may be activated at warm | | |
| | conditions | | |
| | (stabilising and thickening | | |
| | agent) | 0 - 80 | 0 - 32 |
| - | sugar | qs | |

### Example 3

Compound in powdery form containing a stabilising and thickening agent which may be activated at room temperature.

| | | A | B |
|---|---|---|---|
| - | L-ascorbic acid | | |
| | (antioxidant agent) | 0 - 10 | 0 - 4 |
| - | sorbic acid or its salts | | |
| | (preservative agent) | 0 - 10 | 0 - 4 |
| - | citric acid | | |
| | (acidifying agent) | 0 - 30 | 0 - 12 |
| - | modified, or natural, precooked | | |
| | or non-precooked, starch which | | |
| | may be activated at room | | |
| | temperature | | |
| | (stabilising and thickening | | |
| | agent) | 0 - 80 | 0 - 32 |
| - | sugar | qs | |

### Example 4

Compound in powdery form containing a stabilising and thickening agent which may be activated at warm conditions

| | | A | B |
|---|---|---|---|
| - | L-ascorbic acid | | |
| | (antioxidant agent) | 0 - 10 | 0 - 4 |
| - | sorbic acid or its salts | | |
| | (preservative agent) | 0 - 10 | 0 - 4 |
| - | citric acid | | |
| | (acidifying agent) | 0 - 30 | 0 - 12 |
| - | modified, or natural, precooked | | |
| | or non-precooked, starch which | | |
| | may be activated at warm | | |
| | conditions | | |
| | (stabilising and thickening | | |
| | agent) | 0 - 80 | 0 - 32 |
| - | sugar or dehydrated glucose syrup | qs | |

### Example 5

Compound in the form of a dense paste.

| | | A | B |
|---|---|---|---|
| - | L-ascorbic acid | | |
| | (antioxidant agent) | 0 - 10 | 0 - 4 |
| - | sorbic acid or its salts | | |
| | (preservative agent) | 0 - 10 | 0 - 4 |
| - | citric acid | | |
| | (acidifying agent) | 0 - 30 | 0 - 12 |
| - | modified, or natural, precooked | | |
| | or non-precooked, starch | | |
| | (stabilising and thickening | | |
| | agent) | 0 - 80 | 0 - 32 |
| - | sugar or fructose, water, | | |
| | glucose syrup | qs | |

The percentages of the ingredients indicated in column A are merely exemplificative, since also pastes having percentages not comprised within the ranges indicated may make possible to obtain a satisfactory product, if the ingredients are used in suitable proportions with respect to the other ingredients of the product, in particular water, sugar and fruit. Therefore, in view of the results which can be obtained in connection with the food product, the percentage of the various ingredients shown in column B is more significant.

The wide range of values shown for the percentage of the starch depends on the features desired for the food product to be obtained. For example for fruit sauces to be used for garnishing ice creams, a certain degree of flowability of the product is required, which implies a relatively small quantity of starch, whereas for confectionery sauces, a greater thickness of the product may be required, so that it does not tend to flow, which implies a relatively high quantity of starch.

Particularly satisfactory results have been obtained using a modified starch.

A fruit sauce to be used at positive centigrade temperatures may be preprared by dry mixing a suitable quantity of compound of Example 1 with a suitable quantity of sugar, or fructose, adding water and subsequently adding fresh, or unfrozen, fruit, or fruit-juice.

Suggested doses for preparing a sauce containing 1 Kg of fruit:
- sugar 375 g
- compound of Example 1 125 g
- water 250 g

To facilitate the dilution in water, it is preferred that the water is at a temperature greater than 50 °C.

Another fruit sauce to be used at positive centigrade temperatures and suitable for garnishing ice-creams may be preprared by dry mixing a suitable quantity of compound of Example 3 with a suitable quantity of sugar, or fructose, adding water and subsequently adding fresh, or unfrozen, fruit, or fruit-juice.

Suggested doses for preparing a fruit sauce for garnishing ice creams:
- sugar 150 g to 380 g
- compound of Example 3 60 g to 100 g
- water 100 g to 300 g
- fruit 400 g to 500 g

To facilitate the dilution in water, it is preferred that the water is at a temperature greater than 50 °C.

The sauce obtained reaches an optimal degree of brightness and creaminess after about 2 hours from preparation.

A further fruit sauce to be used at positive centigrade temperatures and suitable for garnishing ice-creams may be preprared by dry mixing a suitable quantity of compound of Example 5 with a suitable quantity of fresh, or unfrozen, fruit, or fruit-juice.

Suggested doses for preparing a fruit sauce for garnishing ice creams:
- compound of Example 5 400 g to 500 g
- fruit 400 g to 500 g

The ratio between the quantity of compound and the quantity of fruit may be advatageously about 1:1.

The sauce obtained reaches an optimal degree of brightness and creaminess after about 30 min from preparation.

A fruit sauce to be used at negative centigrade temperatures and containing fruit, possibly pieces of fruit, may be prepared by performing a preliminary process of partial candying of the fruit, dry mixing a suitable quantity of compound of Example 2 with a suitable quantity of sugar, or fructose, adding water to the mixture and finally adding the partially candied fruit previosly obtained.

Suggested doses for preparing a sauce containing 1 Kg of fruit:
- sugar for precandying 1000 g
- temperature of precandying 50 °C
- time of precandying (about) 5 hours
- compound of Example 2 125 g
- sugar 50 g
- water 250 g
- temperature of activation of compound 75 °C
- time for preparing (about) 3 min

The sauce obtained has a very bright appearence with natural coloration.

Another fruit sauce to be used at negative centigrade temperatures and containing fruit, possibly pieces of fruit, may be prepared by performing a preliminary process of partial candying of the fruit, dry mixing a suitable quantity of compound of Example 3 with a suitable quantity of sugar, or fructose, adding water to the mixture and finally adding the partially candied fruit previosly obtained.

Suggested doses for precandying fruit to be used in the preparation of the fruit sauce:
- fruit 480 g
- sugar for precandying 320 g
- temperature of precandying 50 °C
- time of precandying (about) 5 hours

Suggested doses for preparing the sauce using the precandied fruit:
- compound of Example 3 60 g
- sugar 50 g
- water 100 g
- precandied fruit 800 g
- time for preparing (about) 3 min

The sauce obtained has a very bright appearence with natural coloration.

A sauce to be used at negative centigrade temperatures and obtained using fruit mix, puree, or fruit juice, may be prepared by dry-mixing the compound of Example 2 with a suitable quantity of sugar or fructose, adding the fruit mix, or puree, or fruit juice and heating at a temperature of 75 °C for a few minutes.

Suggested doses for preparing a sauce containing 1 Kg of fruit mix, puree, or fruit juice:
- sugar 700 g
- compound of Example 2 125 g
- temperature of activation for a few minutes 75 °C

The sauce obtained has a very bright appearence with natural coloration.

Another sauce to be used at negative centigrade temperatures and obtained using fruit mix, puree, or fruit juice, may be prepared by dry-mixing the compound of Example 3 with a suitable quantity of sugar or fructose, adding water, the fruit mix, or puree, or fruit juice.

Suggested doses for preparing a sauce containing fruit mix, puree, or fruit juice:
- sugar 380 g
- compound of Example 3 70 g
- water 150 g
- fruit mix 400 g

The sauce obtained has a very bright appearence with natural coloration.

A further sauce to be used at negative centigrade temperatures and obtained using fruit mix, puree, or fruit juice, may be prepared by mixing the compound of Example 5 with a suitable quantity of fruit mix, or puree, or fruit juice.

Suggested doses for preparing a sauce containing fruit mix, puree, or fruit juice:
- compound of Example 5 700 g
- fruit mix 500 g

The sauce obtained has a very bright appearence with natural coloration.

A fruit-salad sauce obtained using pieces of fresh fruit may be prepared by dissolving the coumpound of Example 3 in water and adding the pieces of fruit.

Suggested doses:
- compound of Example 3 150 g
- water 500 g
- pieces of fruit 1000 g

Another fruit-salad sauceobtained by using pieces of fresh fruit may be prepared by dry mixing the compound of Example 3 with a suitable quantity of sugar, adding water and the pieces of fruit.

Suggested doses:
- compound of Example 3 about 30 g
- water 340 g
- pieces of fruit 440 g

The resulting fruit salad has a bright appearence, a natural colour and taste and is protected from natural oxidation and microbial attacks.

Another fruit-salad sauce may be prepared by amalgamating the pasty compound of Example 5 with pieces of fruit and, if necessary, with water.

Suggested doses:
- compound of Example 5 200 g
- water (if necessary) 100 g
- pieces of fruit 1000 g

A sauce containing fruit and suitable for stuffing baked confectionery, such as short pastry shells or tarts, may be prepared by mixing the compound of Example 4 with sugar, adding water, heating up to boiling temperature, adding fruit, possibly pieces of fruit, after heating has terminated.

Suggested doses:
- compound of Example 4 50 g
- sugar 200 g
- water 250 g
- fruit 500 g

A sauce containing fruit suitable for stuffing baked confectionery may be prepared by mixing the compound of Example 4 with sugar, adding water, heating up to boiling temperature and adding fruit, possibly pieces of fruit, after heating has terminated.

Suggested doses:
- compound of Example 4 90 g
- sugar 350 g
- water 180 g
- fruit 440 g

Another sauce containing fruit suitable for stuffing baked confectionery may be prepared by mixing the compound of Example 5 with unfrozen and drained fruit. Suggested doses:
- compound of Example 5 700 g
- fruit (defrozen and drained) 500 g

A fruit sauce suitable for stuffing and garnishing spoon desserts, which are to be eaten at a positive temperature, may be prepared by mixing the compound of Example 4 with sugar, adding water, heating up to boiling temperature, adding fruit, possibly pieces of fruit, after heating has terminated and cooling.

Suggested doses:
- compound of Example 4 60 g
- sugar 200 g
- water 240 g
- fruit 500 g

The sauces obtained using the compounds according to the invention may be preserved in a refrigerator for a period of about 5 days, without organoleptic (microbiological) alterations, or alterations of the appearence, and outside the refrigerator for a period of about 3 days.

The invention provides a practical and versatile compound which allows the user to freely choose the type of sauce to be prepared depending on the particular tastes of his customers, or on the range of fresh fruit available on the market.

Therefore it is no more necessary for the user to supply himself with ready-for-use sauces of different tastes in order to be able to offer his customers the desired variety of flavours. This implies a considerable economic saving and a simplification in managing the stocks of product.

A further advantage of the invention is that the sauces obtained have a very natural flavour and appearance, and do not have the flavour of cooked fruit which is usually produced by pasteurizing processes which are usually performed in the industrial preparation of the ready-to-use package sauces of the prior art.

Moreover, with respect to conventional sauces, the compound according to the invention may be advantageously prepared without adding artificial flavours, which influence the taste of the preparation.

Finally, a further advantage lies in the fact that the compund according to the invention allows the user to prepare fruit sauces having greater or less consistency by simply increasing or decresing, respectively, the amount of compound used.

## Claims

1. Fruitless ready-to-use pre-mix package containing a compound for a professional user intended to be added to fruit for preparing a flowable or semifluid fresh fruit-based product, said compound being a pasty compound and comprising:
- an antioxidant agent,
- a preservative agent,
- an acidifying agent,
- a stabilising and thickening agent.

2. Package according to claim 1, wherein said antioxidant agent is selected from a group comprising ascorbic acid, salts and derivatives thereof, gallates, butylated hydroxyanisole, butilated hydroxytoluene, tocopherols.

3. Package according to claim 1, or 2, wherein said preservative agent is selected from a group comprising sorbic acid and its salts, propionic acid and its salts, benzoic acid and its salts, hydroxybenzoates.

4. Package according to any preceding claim, wherein said acidifying agent is selected from a group comprising citric acid, tartaric acid, metatartaric acid, malic acid.

5. Package according to any preceding claim, wherein said stabilising and thickening agent is selected from a group comprising starch, gelatines, alginic acid and its salts, guar gum and other gums, agar-agar, carrageenin, meal of carob seeds, pectins, cellulose and its derivatives, xanthan gum.

6. Package according to any preceding claim, wherein at least some of said agents are in the form of powder.

7. Package according to any preceding claim, wherein said agents are present in the following percentages:
- antioxidant agent up to 4
- preservative agent up to 10
- acidifying agent up to 30
- stabilising and thickening agent up to 80
- sweetener, water as needed

8. A method of preparing a fruit salad, comprising mixing pieces of fresh fruit with a compound from a ready-to-use pre-mix package containing:
- an antioxidant agent,
- a preservative agent,
- an acidifying agent,
- a stabilising and thickening agent,
- possibly sugar,
- possibly water.

9. A method according to claim 8, wherein said antioxidant agent is selected from a group comprising ascorbic acid, salts and derivatives thereof, gallates, butylated hydroxyanisole, butilated hydroxytoluene, tocopherols.

10. A method according to claim 8, or 9, wherein said preservative agent is selected from a group comprising sorbic acid and its salts, propionic acid and its salts, benzoic acid and its salts, hydroxybenzoates.

11. A method according to any one of claim 8 to 10, wherein said acidifying agent is selected from a group comprising citric acid, tartaric acid, metatartaric acid, malic acid.

12. A method according to any one of claim 8 to 11 wherein said stabilising and thickening agent is selected from a group comprising starch, gelatines, alginic acid and its salts, guar gum and other gums, agar-agar, carrageenin, meal of carob seeds, pectins, cellulose and its derivatives, xanthan gum.

13. A method according to any one of claim 8 to 12 wherein said compound is in the form of powder.

14. A method according to any one of claims 8 to 13, wherein said compound is in the form of a flowable paste

15. A method according to any one of claim 8 to 14, wherein said compound has the following weight composition:
- antioxidant agent up to 10%
- preservative agent up to 10%
- acidifying agent up to 30%
- stabilising and thickening agent up to 80%
- sugar as needed

16. A method according to any one of claim 8 to 15, and further comprising adding water.

17. A method according to any one of claim 8 to 16, and further comprising adding sugar.

## Patentansprüche

1. Fruchtlose vorgemischte Packung enthaltend eine Mischung für einen professionellen Nutzer für eine Zugabe zu einer Frucht zur Zubereitung eines fließfähigen oder halbflüssigen frischen Frucht-basierten Produktes, wobei die Mischung eine pastöse Mischung ist, die enthält:
- ein Antioxidationsmittel,
- ein Konservierungsmittel,
- ein Säuerungsmittel,
- ein Stabilisierungs- und Dickungsmittel.

2. Packung nach Anspruch 1, bei der das Antioxidationsmittel aus einer Gruppe ausgewählt ist, die Ascorbinsäure, Salze und Derivate davon, Gallate, butylierte Hydroxyanisole, butylierte Hydroxytuluene, Tocopherole umfasst.

3. Packung nach Anspruch 1 oder 2, bei der das Konservierungsmittel aus einer Gruppe ausgewählt ist, die Sorbinsäure und ihre Salze, Propionsäure und ihre Salze, Benzoesäure und ihre Salze und Hydroxybenzoate umfasst.

4. Packung nach irgendeinem der vorhergehenden Ansprüche, bei der das Säuerungsmittel ausgewählt ist aus einer Gruppe, die Citronensäure, Traubensäure, Metatraubensäure und Apfelsäure umfasst.

5. Packung nach irgendeinem der vorhergehenden Ansprüche, bei der das Stabilisierungs- und Dickungsmittel aus einer Gruppe ausgewählt ist, die Stärke, Gelatine, Alginsäure und ihre Salze, Guaran und andere Gums, Agar-Agar, Karrageen, Johannisbrotsamen, Pektine, Cellulose und ihre Derivate und Xanthanlösung umfasst.

6. Packung nach irgendeinem der vorhergehenden Ansprüche, bei der wenigstens eines der genannten Reagenzien in der Form eines Pulvers vorliegt.

7. Packung nach irgendeinem der vorhergehenden Ansprüche, bei der die genannten Reagenzien in den folgenden Prozentsätzen vorliegen:
- Antioxidationsmittel bis zu 4
- Konservierungsmittel bis zu 10
- Säuerungsmittel bis zu 30
- Stabilisierungs- und Dickungsmittel bis zu 80
- Süßungsmittel, Wasser soweit erforderlich.

8. Verfahren zum Herstellen eines Obstsalates umfassend das Mischen von Stücken von frischer Frucht mit einer Mischung aus einer vorgemischten Fertigpackung, die enthält:
- ein Antioxidationsmittel,
- ein Konservierungsmittel,
- ein Säuerungsmittel,
- ein Stabilisierungs- und Dickungsmittel,
- möglicherweise Zucker,
- möglicherweise Wasser.

9. Verfahren nach Anspruch 8, bei dem das Antioxidationsmittel aus einer Gruppe ausgewählt ist, die Ascorbinsäure, Salze und Derivate davon, Gallate, butylierte Hydroxyanisole, butylierte Hydroxytoluene, Tocopherole enthält.

10. Verfahren nach Anspruch 8 oder 9, bei dem das Konservierungsmittel aus einer Gruppe ausgewählt wird, die Sorbinsäure und ihre Salze, Propionsäure und ihre Salze, Benzoesäure und ihre Salze, Hydroxybenzoate enthält.

11. Verfahren nach irgendeinem der Ansprüche 8 bis 10, bei dem das Säuerungsmittel aus einer Gruppe ausgewählt ist, die Citronensäure, Weinsäure, Metaweinsäure und Apfelsäure enthält.

12. Verfahren nach irgendeinem der Ansprüche 8 bis 11, bei dem das Stabilisierungs- und Dickungsmittel ausgewählt ist aus einer Gruppe, die Stärke, Gelatine, Alginsäure und ihre Salze, Guaran und andere Gums, Agar-Agar, Karrageen, Johannisbrotsamen, Pektine, Cellulose und ihre Derivate und Xanthanlösung enthält.

13. Verfahren nach irgendeinem der Ansprüche 8 bis 12, bei dem die Mischung in der Form eines Pulvers vorliegt.

14. Verfahren nach irgendeinem der Ansprüche 8 bis 13, bei dem die Mischung in der Form einer fließfähigen Paste vorliegt.

15. Verfahren nach irgendeinem der Ansprüche 8 bis 14, bei dem die Mischung die folgende Gewichtszusammensetzung hat:
- Antioxidationsmittel bis zu 10 %
- Konservierungsmittel bis zu 10 %
- Säuerungsmittel bis zu 30 %
- Stabilisierungs- und Dickungsmittel bis zu 80 %
- Zucker soweit benötigt.

16. Verfahren nach irgendeinem der Ansprüche 8 bis 15, das ferner das Zugeben von Wasser umfasst.

17. Verfahren nach irgendeinem der Ansprüche 8 bis 16, das ferner das Zugeben von Zucker umfasst.

## Revendications

1. Préparation prémélangée sans fruits prête à l'usage contenant un composé, pour un utilisateur professionnel, destinée à être ajoutée à des fruits pour préparer un produit fluide ou semi-fluide à base de fruits frais, ledit composé étant un composé pâteux et comprenant:
- un agent antioxydant,
- un agent de conservation,
- un (agent) acidifiant,
- un agent stabilisant et épaississant.

2. Préparation selon la revendication 1, dans laquelle ledit agent antioxydant est choisi dans un groupe comprenant l'acide ascorbique, les sels et dérivés de celui-ci, les gallates, le butylhydroxyanisol (BHA), le butylhydroxytoluène (BHT), les tocophérols.

3. Préparation selon la revendication 1 ou 2, dans laquelle ledit agent de conservation est choisi dans un groupe comprenant l'acide sorbique et ses sels, l'acide propionique et ses sels, l'acide benzoïque et ses sels, les hydroxybenzoates.

4. Préparation selon l'une quelconque des revendications précédentes, dans laquelle ledit agent acidifiant est choisi dans un groupe comprenant l'acide citrique, l'acide tartrique, l'acide métatartrique, l'acide malique.

5. Préparation selon l'une quelconque des revendications précédentes, dans laquelle ledit agent stabilisant et épaississant est choisi dans un groupe comprenant l'amidon, les gélatines, l'acide alginique et ses sels, la gomme de guar et autres gommes, l'agar-agar, la carraghénine, la farine de graines de caroube, les pectines, la cellulose et ses dérivés, la gomme xanthane.

6. Préparation selon l'une quelconque des revendications précédentes, dans laquelle au moins une partie desdits agents sont sous forme de poudre.

7. Préparation selon l'une quelconque des revendications précédentes, dans laquelle lesdits agents sont présents selon les pourcentages suivants:
- agent antioxydant jusqu'à 4
- agent de conservation jusqu'à 10
- (agent) acidifiant jusqu'à 30
- agent stabilisant et épaississant jusqu'à 80
- édulcorant, eau selon les besoins.

8. Procédé de préparation d'une salade de fruits, comprenant le mélange de morceaux de fruits frais avec un composé d'une préparation prémélangée prête à l'usage contenant:
- un agent antioxydant,
- un agent de conservation,
- un (agent) acidifiant,
- un agent stabilisant et épaississant,
- éventuellement du sucre,
- éventuellement de l'eau.

9. Procédé selon la revendication 8, dans lequel ledit agent antioxydant est choisi dans un groupe comprenant l'acide ascorbique, les sels et dérivés de celui-ci, les gallates, le butylhydroxyanisol (BHA), le butylhydroxytoluène (BHT), les tocophérols.

10. Procédé selon la revendication 8 ou 9, dans lequel ledit agent de conservation est choisi dans un groupe comprenant l'acide sorbique et ses sels, l'acide propionique et ses sels, l'acide benzoïque et ses sels, les hydroxybenzoates.

11. Procédé selon l'une quelconque des revendications 8 à 10, dans lequel ledit agent acidifiant est choisi dans un groupe comprenant l'acide citrique, l'acide tartrique, l'acide métatartrique, l'acide malique.

12. Procédé selon l'une quelconque des revendications 8 à 11, dans lequel ledit agent stabilisant et épaississant est choisi dans un groupe comprenant l'amidon, les gélatines, l'acide alginique et ses sels, la gomme de guar et autres gommes, l'agar-agar, la carraghénine, la farine de graines de caroube, les pectines, la cellulose et ses dérivés, la gomme xanthane.

13. Procédé selon l'une quelconque des revendications 8 à 12, dans lequel ledit composé est sous forme de poudre.

14. Procédé selon l'une quelconque des revendications 8 à 13, dans lequel ledit composé se présente sous forme d'une pâte fluide.

15. Procédé selon l'une quelconque des revendications 8 à 14, dans lequel composé a la composition pondérale suivante :
- agent antioxydant jusqu'à 10 %
- agent de conservation jusqu'à 10 %
- (agent) acidifiant jusqu'à 30 %
- agent stabilisant et épaississant jusqu'à 80 %
- sucre selon les besoins.

16. Procédé selon l'une quelconque des revendications 8 à 15, et comprenant de plus l'ajout d'eau.

17. Procédé selon l'une quelconque des revendications 8 à 16, et comprenant de plus l'ajout de sucre.
